# EUROPÄISCHE PATENTANMELDUNG

(11) **EP 1 470 748 A2**
(43) Veröffentlichungstag der Anmeldung: **27.10.2004**
(21) Anmeldenummer: 04101509.0
(22) Anmeldetag: 14.04.2004
(51) Int. Cl.: A01D 63/02

(54) **Stängelheberschnecke mit einer Antriebseinrichtung und Erntevorsatz**

(30) Priorität: 16.04.2003 DE 10317469
(71) Anmelder: Maschinenfabrik Kemper GmbH & Co. KG, 48973 Stadtlohn (DE)
(72) Erfinder: Rickert, Clemens, 48703, Stadtlohn (DE); Böckmann, Norbert, 48703, Stadtlohn (DE)
(74) Vertreter: Holst, Sönke, Dr.

(57) **Zusammenfassung**

Die Erfindung bezieht sich auf eine Antriebseinrichtung einer drehbar antreibbaren Stängelheberschecke (44). Es wird vorgeschlagen, dass die Antriebseinrichtung eingerichtet ist, die Stängelheberschnecke (44) an ihrem in ihrer Vorwärtsrichtung (V) vorderen Ende anzutreiben. Dadurch besteht die Möglichkeit, die Stängelheberschnecke (44) an ihrem vorderen Ende zur Anpassung an die jeweiligen Erntebedingungen zu verschwenken, ohne einen Antrieb an die Schwenkbewegung anpassen zu müssen.

## Beschreibung

Die Erfindung betrifft eine Stängelheberschnecke mit einer Antriebseinrichtung, wobei die Stängelheberschnecke durch die Antriebseinrichtung drehbar antreibbar und an einem ersten Ende bewegbar angeordnet und an ihrem zweiten Ende an verschiedenen Positionen befestigbar ist.

Bei der Ernte von Mais mit einem Maispflücker oder einem Maisgebiss erweist es sich oft als vorteilhaft, an einer oder beiden Seiten des Erntevorsatzes Stängelheberschnecken anzubringen, die auch als Lagermaisschnecken bezeichnet werden. Es handelt sich um sich in der Fahrtrichtung erstreckende, konische Schneckenförderer, die in Drehung versetzt werden und von einer vorn angeordneten Spitze nach hinten ansteigen. Sie fördern liegende Pflanzen nach oben und hinten, so dass sie mit in den Gutstrom aufgenommen werden.

Der in der Regel mechanische oder hydraulische Antrieb der Stängelheberschnecken erfolgt im Stand der Technik (s. DE 32 31 953 C und dort genannter Stand der Technik sowie US 6 032 444 A) von der Rückseite her. Soll die Höhe des hinteren Endes der an ihrem vorderen Ende verschwenkbar gelagerten Stängelheberschnecke verstellt werden, sind insbesondere bei mechanischen Antrieben aufwändige Lösungen erforderlich.

Die der Erfindung zu Grunde liegende Aufgabe wird darin gesehen, einen Antrieb für eine insbesondere höhenverstellbare Stängelheberschnecke bereitzustellen, der sich durch Einfachheit auszeichnet.

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Es wird vorgeschlagen, die Stängelheberschnecke an ihrem ersten Ende, an dem sie beweglich gelagert ist und an dem sie bei einer Verstellung den geringsten Verstellweg hat, anzutreiben. Auf diese Weise wird es möglich, sie an ihrem ersten Ende verschwenkbar und/oder anderweitig bewegbar zu lagern, um ihr zweites Ende beispielsweise in der Höhe und/oder seitlich verstellen und an die jeweiligen Erntebedingungen anpassen zu können, ohne aufwändige Mittel zur Anpassung der Antriebseinrichtung an diese Verstellmöglichkeit vorsehen zu müssen.

In der Regel ist das erste Ende der Stängelheberschnecke ihr in einer Vorwärtsrichtung vorderes Ende.

Der Antrieb der Stängelheberschnecke kann grundsätzlich auf beliebige Art erfolgen, beispielsweise durch einen Elektro- oder Hydromotor. Da für diese aber zusätzliche Leitungen zwischen einem Erntevorsatz und einer Erntemaschine bereitzustellen sind, ist ein mechanischer Antriebsstrang bevorzugt, der die Stängelheberschnecke mit anderen angetriebenen Elementen des Erntevorsatzes verbindet, z. B. einer sich quer erstreckenden Antriebswelle oder der Antriebswelle eines Schneckenförderers. Ein Vorteil eines Elektro- oder Hydromotors besteht hingegen in seinen flexiblen Zuleitungen, die eine beliebige Beweglichkeit des Motors erlauben.

Um die Stängelheberschnecke an ihrem vorderen Ende um eine Achse verschwenken zu können, ohne Maßnahmen für eine entsprechende Anpassung des Antriebsstrangs treffen zu müssen, wird vorgeschlagen, ein Winkelgetriebe vorzusehen. Dessen Abtriebswelle steht mit der Stängelheberschnecke in Antriebsverbindung, während die Antriebswelle sich koaxial zur Schwenkachse der Stängelheberschnecke und zweckmäßigerweise auch der Schwenkachse des Gehäuses des Winkelgetriebes erstreckt. Dadurch wird das Gehäuse des Winkelgetriebes beim Verstellen der Stängelheberschnecke mit ihr mitverschwenkt, ohne dass im Antriebsstrang des Winkelgetriebes ein Ausgleich stattfinden müsste.

Der Antrieb des Winkelgetriebes erfolgt in der Regel von hinten her, d. h. durch einen Antriebsstrang, der sich in der Vorwärtsrichtung erstreckt. Es kann eine Welle oder ein Zugmittelgetriebe mit einer Kette oder einem Riemen verwendet werden, der insbesondere durch eine Querwelle des Erntevorsatzes oder eine damit gekoppelte Welle angetrieben wird.

Eine Möglichkeit, das zweite Ende der Stängelheberschnecke zweidimensional zu verstellen, besteht darin, ihr erstes Ende über ein Kreuzgelenk anzutreiben. Es ermöglicht einen hinreichenden Verstellbereich. Die Eingangsseite des Kreuzgelenks kann starr am Rahmen des Erntevorsatzes gelagert sein, während die Ausgangsseite des Kreuzgelenks mit der Stängelheberschnecke verstellt wird. Bei einer anderen Ausführungsform kann die Eingangsseite des Kreuzgelenks in einer Richtung verstellt werden, um mit einem kleineren Winkelbereich des Kreuzgelenks auszukommen, oder bei gegebenem Winkelbereich des Kreuzgelenks einen größeren Verstellbereich der Stängelheberschnecke zu erzielen.

Bei einem elektrischen oder hydraulischen Antrieb der Stängelheberschnecke, bei dem flexible Leitungen zum Antrieb eines Motors verwendet werden, besteht auch die Möglichkeit, das erste Ende der Stängelheberschnecke durch ein Kugelgelenk abzustützen. Das Kugelgelenk erlaubt eine zweidimensionale Verstellung des an ihm abgestützten zweiten Endes der Stängelheberschnecke. Ein Kugelgelenk kann auch bei einem mechanischen Antrieb der Stängelheberschnecke eingesetzt werden, falls beispielsweise eine flexible Welle oder ein Kreuzgelenk zu ihrem Antrieb genutzt wird.

Die erfindungsgemäße Stängelheberschnecke kann an beliebigen Erntevorsätzen Verwendung finden, beispielsweise an Schneidwerken, Maisgebissen oder Maispflückern.

Schließlich wird vorgeschlagen, an der Unterseite der Stängelheberschnecke eine erste Seitenwand vorzusehen, die gemeinsam mit der Stängelheberschnecke verschwenkbeweglich ist. Diese erste Seitenwand liegt vorzugsweise an einer zweiten Seitenwand des Erntevorsatzes an, so dass sich ein lückenloser Übergang ergibt, der Kolbenverluste verhindert. Die erste Seitenwand kann an einer Außenfläche der zweiten Seitenwand anliegen oder in einem Schlitz der zweiten Seitenwand versenkt werden. Außerdem kann die erste Seitenwand einen oberen, die Stängelheberschnecke teilweise trogförmig umschließenden Bereich aufweisen, um die Kolbenverluste zu vermindern. Die erste Seitenwand kann aus einem in sich starren Material, wie Kunststoff oder Metall oder aus einem in sich flexiblen Material sein, wie Gummi oder Leinwand.

In den Zeichnungen sind drei nachfolgend näher beschriebene Ausführungsbeispiele der Erfindung dargestellt. Es zeigt:
- Fig. 1: perspektivische Ansicht eines Teils eines Erntevorsatzes mit einer ersten Ausführungsform einer erfindungsgemäßen Stängelheberschnecke,
- Fig. 2: einen Schnitt entlang der Linie 2-2 der Figur 1,
- Fig. 3: eine perspektivische Ansicht eines Teils eines Erntevorsatzes mit einer zweiten Ausführungsform einer erfindungsgemäßen Stängelheberschnecke,
- Fig. 4: einen Schnitt entlang der Linie 4-4 der Figur 3, und
- Fig. 5: eine perspektivische Ansicht eines Teils eines Erntevorsatzes mit einer dritten Ausführungsform einer erfindungsgemäßen Stängelheberschnecke.

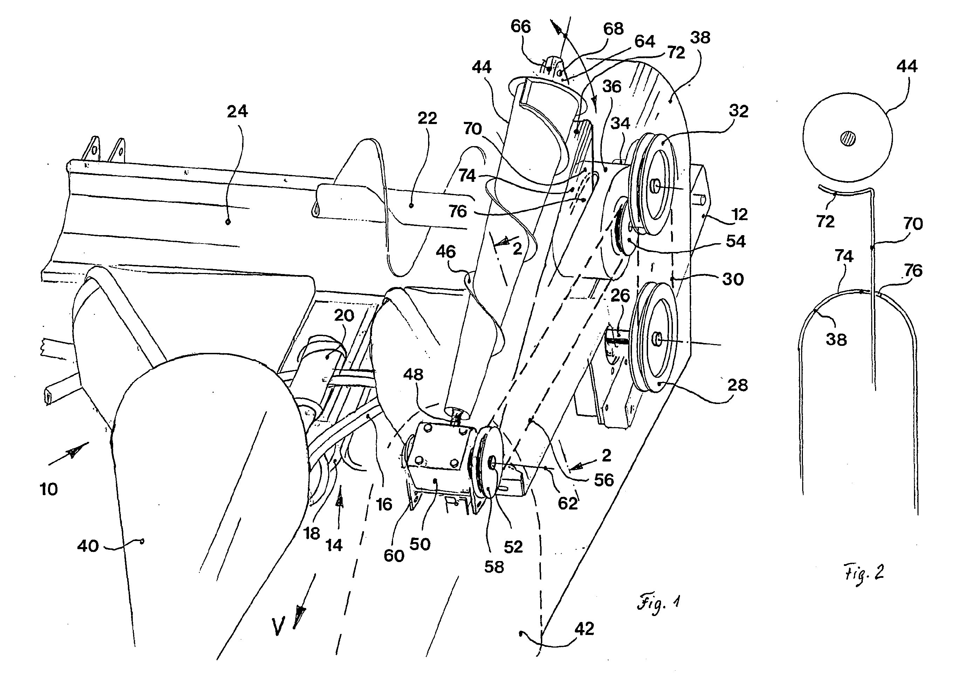

Die Figur 1 zeigt eine Ansicht des in Vorwärtsrichtung V rechten Außenbereichs eines Erntevorsatzes 10 in Form eines Maispflückers. Er umfasst einen Rahmen 12, an dem eine Reihe von Einzugs- und Pflückeinheiten 14 angebracht ist. Sie umfassen jeweils einen um die Hochachse drehenden, mit Mitnehmern 16 versehenen Einzugsförderer, einen Pflückspalt 18 mit darunter angeordneten Pflückwalzen und eine obere Einzugsschnecke 20, die zum Einführen der Pflanzen (insbesondere Mais) in den Pflückspalt 18 dient. Der grundsätzliche Aufbau der Einzugs- und Pflückeinheiten 14 ist in der DE 101 53 198 A detailliert beschrieben, deren Offenbarung durch Verweis mit in die vorliegenden Unterlagen aufgenommen wird.

An der Rückseite der Einzugs- und Pflückeinheiten 14 ist ein Trog 24 und eine darüber angeordnete Querförderschnecke 22 angeordnet, die zum Abtransport der abgetrennten Fruchtstände der Pflanzen zu einer selbstfahrenden Erntemaschine (Mähdrescher oder Feldhäcksler) hin dient.

Der Antrieb der Einzugs- und Pflückeinheiten 14 erfolgt von der selbstfahrenden Erntemaschine her durch eine sich über die Breite des Erntevorsatzes 10 erstreckende Querwelle, die außerdem über eine erste Riemenscheibe 28, einen Riemen 30 und eine zweite Riemenscheibe 32 sowie ein weiteres Getriebe mit zwei Zahnrädern 34, 36 die Querförderschnecke 22 antreibt. Die genannten Getriebeelemente sind an der rechten Seite des Erntevorsatzes 10 geschützt innerhalb eines Gehäuses 38 angeordnet, das die Form eines umgedrehten U hat.

Zwischen den einzelnen Einzugs- und Pflückeinrichtungen 14 sind nach vorn spitz zulaufende Stängelteiler 40 angeordnet, die auf dem Feld stehende Pflanzen, die nicht genau vor den Pflückspalten 18 stehen, in den Wirkungsbereich der Mitnehmer 16 und der oberen Einzugsschnecke 20 bringen. Ein gleichartiger, äußerer Stängelteiler 42 ist auch an der in Vorwärtsrichtung V rechten Seite des Erntevorsatzes 10 angebracht. An seinem rückwärtigen Ende umschließt der äußere Stängelteiler 42 den vorderen Bereich des Gehäuses 38, sodass sich keine größeren Vorsprünge oder dgl. ergeben, an denen sich Pflanzen verfangen könnten.

Von dem rückwärtigen Ende des äußeren Stängelteilers 42 ausgehend erstreckt sich an der Oberseite des Gehäuses 38 eine Stängelheberschnecke 44 nach hinten und oben. Sie setzt sich aus einem konischen Körper, dessen Spitze in Vorwärtsrichtung V vorn liegt und der sich nach hinten erweitert, und einer um den Körper umlaufenden Förderwendel 46 zusammen. Die Stängelheberschnecke 44 wird rotativ angetrieben und dient dazu, Lagermais anzuheben und in die äußere Einzugs- und Pflückeinrichtung 14 zu fördern.

An ihrem in Vorwärtsrichtung V vorderen (ersten) Ende ist die Stängelheberschnecke 44 mit einer Abtriebswelle 48 eines Winkelgetriebes 50 verbunden. Eine Antriebswelle 52 des Winkelgetriebes 50 steht über eine dritte Riemenscheibe 54, einen zweiten Riemen 56 und eine vierte Riemenscheibe 58 mit der Querförderschnecke 22 in Antriebsverbindung. Über den genannten Antriebsstrang und das Winkelgetriebe 50, das beispielsweise kämmende Kegelzahnräder enthalten kann, wird die Stängelheberschnecke 44 während des Erntebetriebs in Drehung versetzt. Die Antriebswelle 52 und die Abtriebswelle 48 sind drehbar im Gehäuse des Winkelgetriebes 50 gelagert. Das Winkelgetriebe 50 und der vordere Bereich der Stängelheberschnecke 44 sind geschützt unterhalb des hinteren Bereichs des äußeren Stängelteilers 42 angeordnet.

Das Gehäuse des Winkelgetriebes 50 ist in einer es umschließenden, gabelförmigen Halterung 60 um die Achse 62 der Antriebswelle 52 frei verschwenkbar gelagert. Die Stängelheberschnecke 44 ist somit an ihrem vorderen Ende mit dem Gehäuse des Winkelgetriebes 50 frei verschwenkbar.

An ihrem hinteren (zweiten) Ende ist die Stängelheberschnecke 44 durch eine verstellbare Halterung 64 am Rahmen 12 abgestützt. Die verstellbare Halterung 64 ist mit einem Arm 66 verbunden, der drehbar am rückwärtigen Ende der Stängelheberschnecke 44 gelagert und um eine horizontal und quer zur Vorwärtsrichtung V verlaufende Achse 68 an der in ihrem oberen Bereich gabelförmigen Halterung 64 angelenkt ist. Die Halterung 64 ist durch geeignete Mittel höhenverstellbar am Rahmen 12 befestigt. Durch Lösen einer Befestigung (z. B. Splint, Mutter, Exzenterhebel oder Schraube), Höhenverstellen der Halterung 64 und anschließendes Festlegen der Befestigung am Rahmen 12 kann die Höhe des rückwärtigen Endes der Stängelheberschnecke 44 frei definiert und an die jeweiligen Erntebedingungen angepasst werden. An ihrem Antrieb ist durch die erfindungsgemäße Anordnung des Winkelgetriebes 50 dabei keine Verstellung erforderlich.

Unterhalb der Stängelheberschnecke 44 ist eine erste Seitenwand 70 angeordnet. Sie ist an ihrem rückwärtigen Ende schwenkbar mit der Halterung 64 oder starr mit dem Arm 66 verbunden und an ihrem vorderen Ende um die Achse 62 verschwenkbar gelagert. Die erste Seitenwand 70 wird somit synchron mit der Stängelheberschnecke 44 verschwenkt, wobei der Abstand zwischen der Stängelheberschnecke 44 und der ersten Seitenwand 70 konstant bleibt. Ein oberer Bereich 72 der ersten Seitenwand 70 umschließt die Stängelheberschnecke 44 trogförmig. Die erste Seitenwand 70 kann beispielsweise aus Blech oder Gummi sein. Um Kolbenverluste zu vermeiden und zu verhindern, dass sich Pflanzenteile in einem Spalt zwischen der ersten Seitenwand 70 und der zweiten Seitenwand 74, die durch das Gehäuse 38 gebildet wird, anordnen, durchdringt die erste Seitenwand 70 einen Schlitz 76 der Seitenwand 74. Dadurch erhält man einen glatten Übergang zwischen der ersten Seitenwand 70 und der zweiten Seitenwand 76.

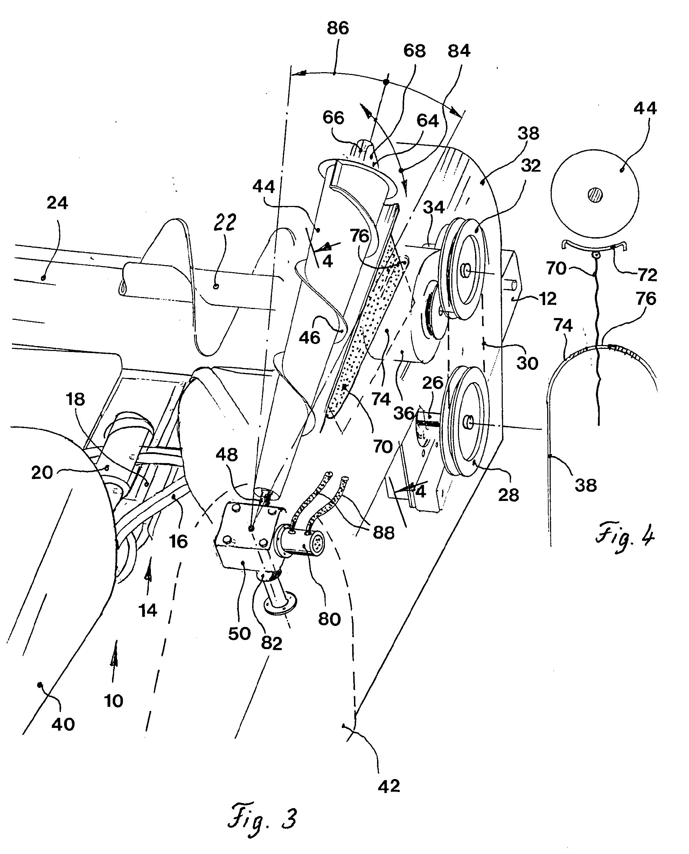

Die Figur 3 zeigt einen Ausschnitt eines Erntevorsatzes 10 mit einer zweiten Ausführungsform einer erfindungsgemäßen Stängelheberschnecke 44 und ihre Anbringung und ihren Antrieb. Mit der ersten Ausführungsform gleichartige Elemente sind mit übereinstimmenden Bezugsziffern versehen und bedürfen daher hier keiner weiteren Beschreibung.

Im Unterschied zur ersten Ausführungsform wird die Stängelheberschnecke 44 über das Winkelgetriebe 50 nicht mechanisch, sondern hydraulisch angetrieben, nämlich durch einen Hydromotor 80. Außerdem ist das Winkelgetriebe 50 an seiner Unterseite durch ein Kugelgelenk 82 mit dem Rahmen 12 des Erntevorsatzes 10 schwenkbar verbunden. Das Kugelgelenk 82 erlaubt eine Bewegung des vorderen Endes der Stängelheberschnecke 44 um eine etwa vertikal verlaufende Achse und um eine horizontal und quer zur Vorwärtsrichtung verlaufende Achse. Es wäre auch denkbar, die Ausgangswelle des Hydromotors 80 direkt mit dem vorderen Ende der Stängelheberschnecke 44 zu verbinden und sein Gehäuse am Kugelgelenk 82 anzubringen. Das Kugelgelenk 82 kann mit lösbaren Arretierungsmitteln ausgestattet werden, die vor einer Verstellung der Stängelheberschnecke 44 gelöst und danach wieder festgelegt werden.

Das Kugelgelenk 82 und die rückwärtige Befestigung der Stängelheberschnecke 44 erlauben es, das hintere Ende der Stängelheberschnecke 44 in seitlicher und vertikaler Richtung zu verstellen, wie durch die Pfeile 84 und 86 angedeutet. Die Halterung 64 ist somit höhenveränderlich und in einer quer zur Vorwärtsrichtung änderbaren Position mit dem Rahmen 12 verbindbar. Das Winkelgetriebe 50 mit der starr mit seiner Abtriebswelle 48 verbundenen Stängelheberschnecke 44 sowie der Hydromotor 80 folgen dieser Verstellbewegung. Der Hydromotor 80 wird durch flexible Schläuche 88 von der Erntemaschine her oder durch eine auf dem Erntevorsatz 10 angeordnete Pumpe mit unter Druck stehender Hydraulikflüssigkeit versorgt. Die Schläuche 88 erlauben durch ihre Flexibilität die Schwenkbewegung des Hydromotors 80.

Ein weiterer Unterschied zur ersten Ausführungsform besteht darin, dass die erste Seitenwand 70 aus einem Leinwand- oder Gummituch besteht, das in der Mitte des trogförmigen Bereichs 72 angebracht ist. Der trogförmige Bereich 72 besteht jedoch aus einem festen Material, wie Metall oder Kunststoff, und ist ebenfalls am Arm 66 oder an der Halterung 64 befestigt.

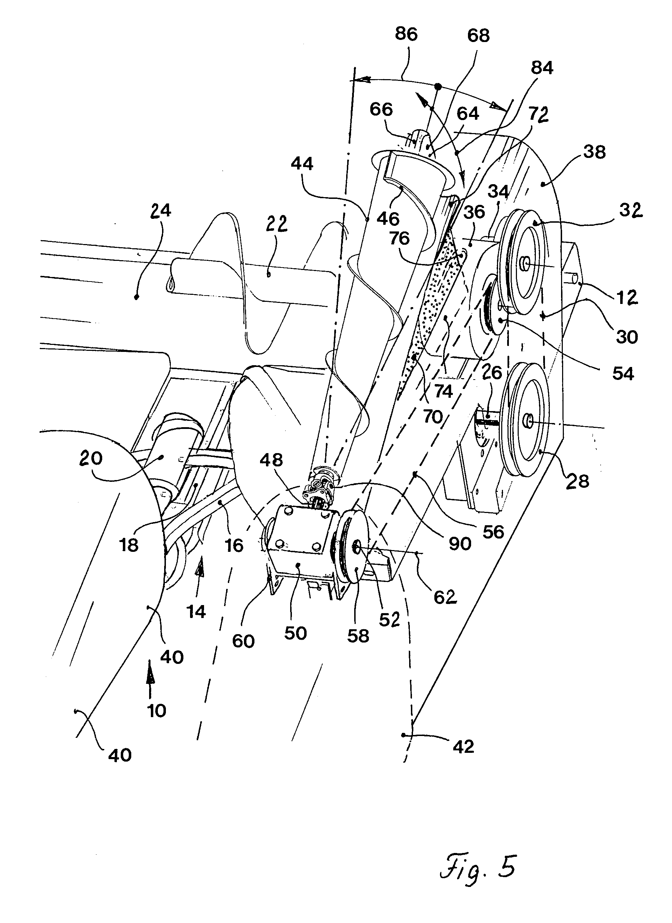

Schließlich zeigt die Figur 5 eine dritte Ausführungsform einer erfindungsgemäßen Stängelheberschnecke 44 und ihre Anbringung und ihren Antrieb. Mit der ersten Ausführungsform gleichartige Elemente sind ebenfalls mit übereinstimmenden Bezugsziffern versehen.

Die dritte Ausführungsform entspricht im Wesentlichen der ersten Ausführungsform. Das Winkelgetriebe 50 wird über den zweiten Riemen 56 mechanisch angetrieben und sein Gehäuse ist in der gabelförmigen Halterung 60 um eine horizontale, quer zur Vorwärtsrichtung verlaufende Achse, die mit der Drehachse 62 der Antriebswelle 52 des Winkelgetriebes 50 zusammenfällt, verschwenkbar. Im Unterschied zur ersten Ausführungsform ist die Abtriebswelle 48 des Winkelgetriebes 50 jedoch nicht starr mit dem vorderen Ende der Stängelheberschnecke 44 verbunden, sondern über ein Kreuzgelenk 90. Das Kreuzgelenk 90 ermöglicht, das rückwärtige Ende der Stängelheberschnecke 44 auch in horizontaler Richtung zu bewegen, wie durch den Pfeil 86 angedeutet. Die Halterung 64 ist daher wie in der Ausführungsform gemäß Figur 3 gestaltet. Die gabelförmige Halterung 60 kann mit lösbaren Arretierungsmitteln für das Gehäuse des Winkelgetriebes ausgestattet sein. Anzumerken ist, dass man das Winkelgetriebe 50 auch starr in der gabelförmigen Halterung 60 anbringen könnte, solange das Kreuzgelenk 90 einen entsprechenden vertikalen Verstellbereich des rückwärtigen Endes der Stängelheberschnecke 44 erlaubt.

## Patentansprüche

1. Stängelheberschnecke (44) mit einer Antriebseinrichtung, wobei die Stängelheberschnecke (44) durch die Antriebseinrichtung drehbar antreibbar und an einem ersten Ende bewegbar angeordnet und an ihrem zweiten Ende an verschiedenen Positionen befestigbar ist, **dadurch gekennzeichnet, dass** die Antriebseinrichtung eingerichtet ist, die Stängelheberschnecke (44) an ihrem ersten Ende anzutreiben.

2. Stängelheberschnecke (44) nach Anspruch 1, **dadurch gekennzeichnet, dass** das erste Ende der Stängelheberschnecke (44) ihr in Vorwärtsrichtung (V) vorderes Ende ist.

3. Stängelheberschnecke (44) nach Anspruch 1 oder 2, **dadurch gekennzeichnet, dass** die Stängelheberschnecke (44) an ihrem ersten Ende schwenkbar gelagert und an ihrem zweiten Ende verstellbar abgestützt ist.

4. Stängelheberschnecke (44) nach Anspruch 3, **dadurch gekennzeichnet, dass** die Stängelheberschnecke (44) an ihrem ersten Ende um eine quer zur Vorwärtsrichtung (V) und horizontal verlaufende Achse schwenkbar gelagert ist.

5. Stängelheberschnecke (44) nach Anspruch 3 oder 4, **dadurch gekennzeichnet, dass** die Stängelheberschnecke (44) an ihrem ersten Ende um eine zumindest näherungsweise vertikal verlaufende Achse schwenkbar gelagert ist.

6. Stängelheberschnecke (44) nach einem der Ansprüche 1 bis 5, **dadurch gekennzeichnet, dass** die Stängelheberschnecke (44) durch einen mechanischen und/oder hydraulischen Antriebsstrang antreibbar ist.

7. Stängelheberschnecke (44) nach einem der Ansprüche 3 bis 6, **dadurch gekennzeichnet, dass** die Stängelheberschnecke (44) mit einem Winkelgetriebe (50) antreibbar ist, dessen Abtriebswelle (48) mit der Stängelheberschnecke (44) verbunden ist und dessen Antriebswelle (52) sich koaxial zur Schwenkachse der Stängelheberschnecke (44) erstreckt.

8. Stängelheberschnecke (44) nach Anspruch 7, **dadurch gekennzeichnet, dass** das Gehäuse des Winkelgetriebes (50) gemeinsam mit der Stängelheberschnecke (44) um die Drehachse (62) der Antriebswelle (52) schwenkbar ist.

9. Stängelheberschnecke (44) nach einem der Ansprüche 3 bis 8, **dadurch gekennzeichnet, dass** die Stängelheberschnecke (44) über ein Kreuzgelenk (90) antreibbar ist.

10. Stängelheberschnecke (44) nach einem der Ansprüche 3 bis 9, **dadurch gekennzeichnet, dass** das erste Ende der Stängelheberschnecke (44) durch ein Kugelgelenk (82) abgestützt ist.

11. Erntevorsatz (10), insbesondere Maispflücker oder Maisgebiss, mit einer Stängelheberschnecke (44) und einer Antriebseinrichtung nach einem der vorhergehenden Ansprüche.

12. Erntevorsatz (10) nach Anspruch 11, **dadurch gekennzeichnet, dass** unterhalb der Stängelheberschnecke (44) eine erste Seitenwand (70) angeordnet ist, die mit dem hinteren Ende der Stängelheberschnecke (44) verbunden und höhenverstellbar ist, und dass die erste Seitenwand (70) an einer zweiten Seitenwand (74) des Erntevorsatzes (10) anliegt.

13. Erntevorsatz (10) nach Anspruch 12, **dadurch gekennzeichnet, dass** die zweite Seitenwand (74) einen Schlitz (76) aufweist, in dem die erste Seitenwand (74) versenkbar ist.

14. Erntevorsatz (10) nach Anspruch 12 oder 13, **dadurch gekennzeichnet, dass** die erste Seitenwand (70) einen die Unterseite der Stängelheberschnecke (44) teilweise trogförmig umschließenden Bereich (72) aufweist.
